# EUROPÄISCHE PATENTSCHRIFT

(11) **EP 1 814 810 B1**
(45) Veröffentlichungstag und Bekanntmachung des Hinweises auf die Patenterteilung: **17.12.2008**
(21) Anmeldenummer: 05797268.9
(22) Anmeldetag: 05.10.2005
(51) Int. Cl.: B65G 49/04

(54) **OBERFLÄCHENBEHANDLUNGSANLAGE MIT EINER UMSETZSTATION**
SURFACE TREATING INSTALLATION COMPRISING A TRANSFER STATION
INSTALLATION DE TRAITEMENT DE SURFACE COMPORTANT UNE STATION DE TRANSFERT

(30) Priorität: 22.11.2004 DE 102004056310
(43) Veröffentlichungstag der Anmeldung: 08.08.2007
(73) Patentinhaber: EISENMANN Anlagenbau GmbH & Co. KG, 71032 Böblingen (DE)
(72) Erfinder: HEIM, Jürgen, 72406 Bisingen (DE); HEIZMANN, Christoph, 71101 Schönaich (DE)
(74) Vertreter: Ostertag, Ulrich
(86) Internationale Anmeldenummer: PCT/EP2005/010708
(87) Internationale Veröffentlichungsnummer: WO 2006/056265

(56) Entgegenhaltungen:
- WO-A-02/088007
- PATENT ABSTRACTS OF JAPAN Bd. 013, Nr. 045 (M-792), 2. Februar 1989 (1989-02-02) -& JP 63 252845 A (HITACHI LTD), 19. Oktober 1988 (1988-10-19)

## Beschreibung

Die Erfindung betrifft eine Oberflächenbehandlungsanlage, insbesondere zur Behandlung von Kunststoffteilen oder von Blechteilen wie etwa Fahrzeugkarosserien, mit einer Umsetzstation zum vertikalen oder horizontalen Umsetzen eines Gegenstands, wobei die Umsetzstation umfaßt:
a) eine ortsfeste Tragstruktur,
b) einen relativ zu der Tragstruktur verfahrbaren Schlitten, der zur Aufnahme des Gegenstands vorgesehen ist,
c) mindestens eine Führungsrolle, über die sich der Schlitten an der Tragstruktur abstützt und die eine umlaufende Rollfläche hat.

Derartige Oberflächenbehandlungsanlagen, wie sie durch Benutzung im Stand der Technik bekannt sind, dienen dazu, Oberflächen von Gegenständen auf unterschiedliche Weise, z.B. durch Aufbringen von Lacken und anderen Beschichtungen, zu behandeln. Häufig enthalten derartige Anlagen mehrere einzelne Behandlungsstationen für unterschiedliche Behandlungsschritte, z.B. Vorbereiten, Lackieren und Trocknen. Die zu behandelnden Gegenstände, bei denen es sich beispielsweise um Kunststoffteile oder Blechteile wie etwa Fahrzeugkarosserien handeln kann, werden zu diesem Zweck mit Hilfe eines Fördersystems von Behandlungsstation zu Behandlungsstation gefördert.

Zur Oberflächenbehandlungsanlage werden hier auch solche Bereiche zwischen und nach den Behandlungsstationen gezählt, in denen die zu behandelnden Gegenstände lediglich gefördert, zwischengelagert oder sortiert werden. Bei diesen Vorgängen müssen die Gegenstände häufig zwischen unterschiedlichen Fördersystemen horizontal oder vertikal umgesetzt werden.

Eine vertikale Umsetzung ist erforderlich, wenn einzelne Stationen der Oberflächenbehandlungsanlage aus bestimmten Gründen relativ zu anderen Stationen in anderen Ebenen angeordnet sind. Sollen die Gegenstände beispielsweise mit heißer Luft oder anderen Gasen, die leichter sind als die umgebende Atmosphäre, behandelt werden, so wird eine solche Behandlung in einem Behandlungsbereich durchgeführt, der über dem sonstigen Arbeitsniveau liegt. Die Gegenstände werden zu diesem Zweck vor dem erhöhten Behandlungsbereichs von dem Arbeitsniveau angehoben und hinter dem Behandlungsbereich wieder auf das erforderliche Arbeitsniveau abgesenkt.

Im Stand der Technik bekannte Umsetzstationen verwenden im allgemeinen einen relativ zu einer ortsfesten Tragstruktur verfahrbaren Schlitten, auf dem die Gegenstände während des Umsetzvorgangs befestigt sind. Der Schlitten stützt sich während des Umsetzvorgangs über Führungsrollen an der Tragstruktur ab; die Führungsrollen können dabei entweder an der Tragstruktur oder an dem Schlitten befestigt sein. Die Rollflächen der Führungsrollen bestehen in der Regel aus einem Kunststoff oder aus Gummi, da diese Materialien sehr gute Laufeigenschaften haben. Das Dokument WO-A-02 088007 offenbart eine Oberflächenbehandlungsanlage gemäß dem Oberbegriff des Anspruchs 1 sowie eine Umsetzstation gemäß dem Oberbegriff des Anspruchs 11.

In Oberflächenbehandlungsanlagen der vorstehend beschriebenen Art werden sehr hohe Anforderungen an die Sauberkeit gestellt. Setzen sich in der Oberflächenbehandlungsanlage Partikel auf den zu behandelnden Oberflächen ab, so führt dies, sofern die Partikel eine gewisse Mindestgröße überschreiten, zu nicht tolerierbaren Oberflächendefekten. Davon betroffene Gegenstände müssen entweder als Ausschuß aussortiert oder aufwendig nachbearbeitet werden. Als nicht mehr tolerierbar gelten dabei im allgemeinen Partikel, deren Durchmesser größer ist als etwa die halbe Dicke der aufzubringenden Schicht.

Um den durch Schmutzpartikel verursachten Ausschuß und den Aufwand bei der Nachbearbeitung zu verringern, werden derartige Oberflächenbehandlungsanlagen regelmäßig und sorgfältig gereinigt. Besonders häufig müssen dabei die Umsetzstationen gereinigt werden, da es dort aufgrund der schnellen Verfahrbewegungen des Schlittens oder infolge von Temperaturunterschieden zu hohen Strömungsgeschwindigkeiten der umgebenden Luft oder eines sonstigen Gasgemischs kommt. Diese Strömungen können dann Schmutzpartikel mitreißen, die sich auf den Teilen der Umsetzstation abgelagert haben.

Aufgabe der Erfindung ist es, die Ablagerungen größerer Partikel auf den zu behandelnden Gegenständen zu verringern, um auf diese Weise den Aufwand bei der Nachbearbeitung und/oder der Reinigung zu reduzieren.

Gelöst wird diese Aufgabe bei einer Oberflächenbehandlungsanlage der eingangs genannten Art dadurch, daß zumindest die Rollfläche der mindestens einen Führungsrolle aus einem antistatischen Material besteht, dessen elektrischer spezifischer Durchgangswiderstand im Mittel zwischen 10 Ωm und 10⁹ Ωm liegt.

Die Erfinder haben erkannt, daß sich die bislang aus Kunststoff oder Gummi gefertigten Führungsrollen während des Abrollens elektrostatisch erheblich aufladen. Die daraus resultierenden elektrischen Kräfte ziehen kleinste Partikel aus der Umgebung an, die sich nach und nach auf den Rollflächen der Führungsrollen ablagern. Die wiederkehrenden Abrollvorgänge führen dazu, daß die sich ablagernden Feinstpartikel zu größeren Partikeln zusammengepreßt werden. Diese trennen sich schließlich, meist während eines Abrollvorgangs, von den Führungsrollen und können dann auf die zu behandelnden Werkstücke fallen, sofern sie nicht vorher im Rahmen von Reinigungsarbeiten entfernt werden. Diese größeren Partikel haben dann häufig eine Größe, die nicht mehr tolerierbar ist.

Durch die erfindungsgemäße Ausgestaltung der Führungsrollen hingegen wird die elektrostatische Aufladung der Rollflächen weitgehend verhindert. Dadurch werden kleine Schmutzpartikel aus der Umgebung nicht mehr oder nur noch in sehr geringem Umfang von den Führungsrollen elektrostatisch angezogen und anschließend zu größeren Partikeln verpreßt. Ein Absetzen größerer Partikel und die damit verbundenen Folgen, nämlich hoher Ausschuß, aufwendige Nachbearbeitung und/oder häufige Reinigung, lassen sich auf diese Weise weitgehend vermeiden.

Die Verringerung des Reinigungsaufwands macht sich nicht nur positiv im Hinblick auf den Zeitaufwand des Reinigungspersonals bemerkbar, sondern verringert auch die Wartungszeiten der Oberflächenbehandlungsanlage. Durch die Verwendung der erfindungsgemäßen Führungsrollen kann somit auf sehr kostengünstige Weise eine nicht unbeträchtliche Effizienzsteigerung der gesamten Oberflächenbehandlungsanlage erzielt werden.

Versuche haben ergeben, daß eine besonders starke Verringerung von Schmutzablagerungen auftritt, wenn der spezifische Durchgangswiderstand des antistatischen Materials zwischen 10³ Ωm und 10⁶ Ωm liegt. Noch günstigere Eigenschaften haben Materialien, deren spezifischer Durchgangswiderstand zwischen 10⁴ Ωm und 10⁵ Ωm liegt.

Antistatische Materialien sind als solche hinlänglich im Stand der Technik bekannt. Bei der Materialauswahl ist allerdings zu beachten, daß die Roll- und Verschleißeigenschaften der Führungsrollen durch die Erhöhung der elektrischen Leitfähigkeit nicht beeinträchtigt werden. Ansonsten besteht die Gefahr, daß ein möglicherweise erhöhter Abrieb eine neue Quelle für die Bildung größerer Partikel darstellt.

Bei einer bevorzugten Ausgestaltung der Erfindung enthält das Material deswegen einen Nichtleiter, z.B. einen thermoplastischen Kunststoff oder Gummi, dem ein leitfähiges Material beigemischt ist. Der Nichtleiter bestimmt dabei maßgeblich die Roll- und Verschleißeigenschaften der Rollflächen, während das beigemischte leitfähige Material, das z.B. partikel- oder faserförmig sein kann, den elektrischen Widerstand verringert.

Grundsätzlich wäre es ebenfalls möglich, auf die Rollflächen eine elektrisch leitende Schicht aufzubringen. Die Roll- und Verschleißeigenschaften einer solchen Schicht sind aber im allgemeinen ungünstiger, als dies bei den vorstehend erläuterten Mischmaterialien der Fall ist.

Gemäß einem alternativen Ausführungsbeispiel wird die oben genannte Aufgabe dadurch gelöst, daß die mindestens eine Führungsrolle einen Rollkörper hat, der im wesentlichen aus einem Nichtleiter besteht, und daß in den Nichtleiter eine Anordnung metallischer Elemente eingebettet ist, die sich zumindest im wesentlichen von einer Drehachse der mindestens einen Führungsrolle radial und vorzugsweise annähernd rotationssymmetrisch zu deren Rollfläche hin erstrecken. Diese Kombination eines nichtleitenden Rollkörpers mit der darin eingebetteten Anordnung metallischer Elemente kann dann ebenfalls einen elektrischen spezifischen Durchgangswiderstand zwischen 10 Ωm und 10⁹ Ωm haben. Zu beachten ist dabei allerdings, daß dieses vergleichsweise grob strukturierte "Material" aufgrund seiner inhomogenen Zusammensetzung einen Durchgangswiderstand hat, den man nur über eine größere Entfernung hinweg sinnvoll messen kann.

Die Elemente sind vorzugsweise borstenartige dünne Drähte, können aber z.B. auch als dünne Blechstreifen ausgebildet sein. Da die Elemente - auch nach längerer Nutzungsdauer - bis an die Rollfläche heranreichen, ist stets ein optimaler Ladungsabfluß gewährleistet. Falls die Elemente im inneren des Rollkörpers mit einem geerdeten Leiter verbunden sind, so können die von der Rollfläche abfließenden Ladungen vollständig aus der Führungsrolle abfließen. Bei der Herstellung des Rollkörpers kann man zunächst die Anordnung der Elemente bereitstellen, die z.B. ähnlich wie eine aus Metallborsten gefertigte Flaschenbürste ausgebildet sein kann. Diese Anordnung wird dann in einen Isolator, z.B. einen Kunststoff mit guten Laufeigenschaften, eingegossen oder einvulkanisiert.

Es versteht sich, daß die vorliegende Erfindung vorteilhaft auch auf andere Arten von Rollen in Umsetzstationen sinnvoll eingesetzt werden kann. In Betracht kommen hierbei beispielsweise die Rollen von Stau- oder Kunststoffketten.

Weitere Vorteile und Merkmale der Erfindung ergeben sich aus der nachfolgenden Beschreibung der Ausführungsbeispiele anhand der Zeichnungen. Darin zeigen:
- Figur 1: eine schematische Seitenansicht eines Teils einer erfindungsgemäßen Lackieranlage für Kraftfahrzeugkarosserien;
- Figur 2: eine Seitenansicht einer Hubstation, die Teil der in der Figur 1 gezeigten Lackieranlage ist, wobei sich ein Lastarm der Hubvorrichtung in der unteren Hubstellung befindet;
- Figur 3: die in der Figur 2 gezeigte Seitenansicht der Hubstation, wobei sich der Lastarm in der oberen Hubstellung befindet;
- Figur 4: eine Rückansicht der in den Figuren 2 gezeigten Hubstation (ohne Fahrzeugkarosserie);
- Figur 5: eine Draufsicht auf die in der Figur 2 gezeigte Hubstation (ohne Fahrzeugkarosserie);
- Figur 6: eine Führungsrolle in einem axialen Schnitt;
- Figur 7: eine alternative Ausgestaltung einer Führungsrolle in einer an die Figur 6 angelehnten Darstellung;
- Figur 8: eine weitere alternative Ausgestaltung einer Führungsrolle in einer ebenfalls an die Figur 6 angelehnten Darstellung.

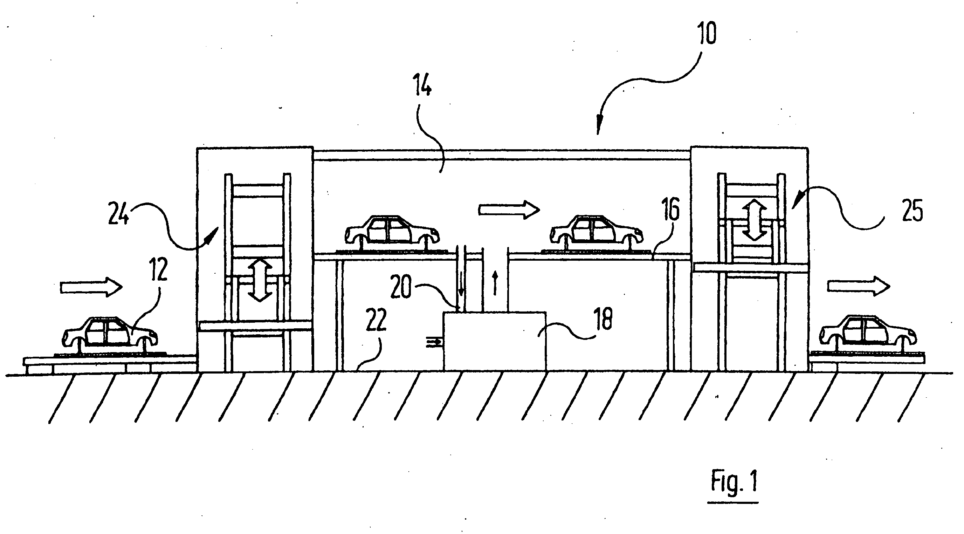

In der Figur 1 ist ein Teil einer Lackieranlage für Kraftfahrzeugkarosserien in einem nicht maßstäblichen und stark schematisierten Längsschnitt gezeigt. Bei dem in der Figur 1 gezeigten Teil handelt es sich um einen Trocknungsbereich 10 zur Trocknung von zuvor beschichteten Kraftfahrzeugkarosserien, dem zwei noch näher zu erläuternde Hubstationen vor- bzw. nachgelagert sind.

Zum Trocknungsbereich 10 gehört ein langgestrecktes Gehäuse 14, auf dessen Boden eine mit 16 angedeutete Fördereinrichtung für die Kraftfahrzeugkarosserien 12 befestigt ist. Bei dieser Fördereinrichtung 16 kann es sich beispielsweise um eine Rollenbahn, einen Kettenförderer oder eine Kombination aus beiden handeln. Zum Trocknungsbereich 10 gehört ferner eine nur schematisch angedeutete Heizeinrichtung 18, die dazu dient, von unten Heißluft in Verteilkanäle einzublasen, welche entlang der Längsseiten des Gehäuses 14 verlaufen. Die mit Lösungsmitteldämpfen angereicherte Heißluft kann über einen Auslaß 20 wieder der Heizeinrichtung 18 zugeleitet werden, von der sie gereinigt und erwärmt wieder in das Gehäuse 14 zurückgeleitet wird.

Das Gehäuse 14 ist gegenüber einem Boden 22 eines umgebenden Gebäudes um einige Meter angehoben. Auf diese Weise wird verhindert, daß die von der Heizeinrichtung 18 in das Gehäuse 14 eingeführte Heißluft in größeren Mengen am Eingang und am Ausgang des Gehäuses 14 aus diesem entweicht. Die erhöhte Anordnung des Gehäuses 14 gegenüber dem Boden 22 macht es erforderlich, die Kraftfahrzeugkarosserien 12 anzuheben, bevor sie durch den Trocknungsbereich 10 gefördert werden können. Umgekehrt müssen die Kraftfahrzeugkarosserien 12 am Ausgang des Trocknungsbereichs 10 wieder abgesenkt werden.

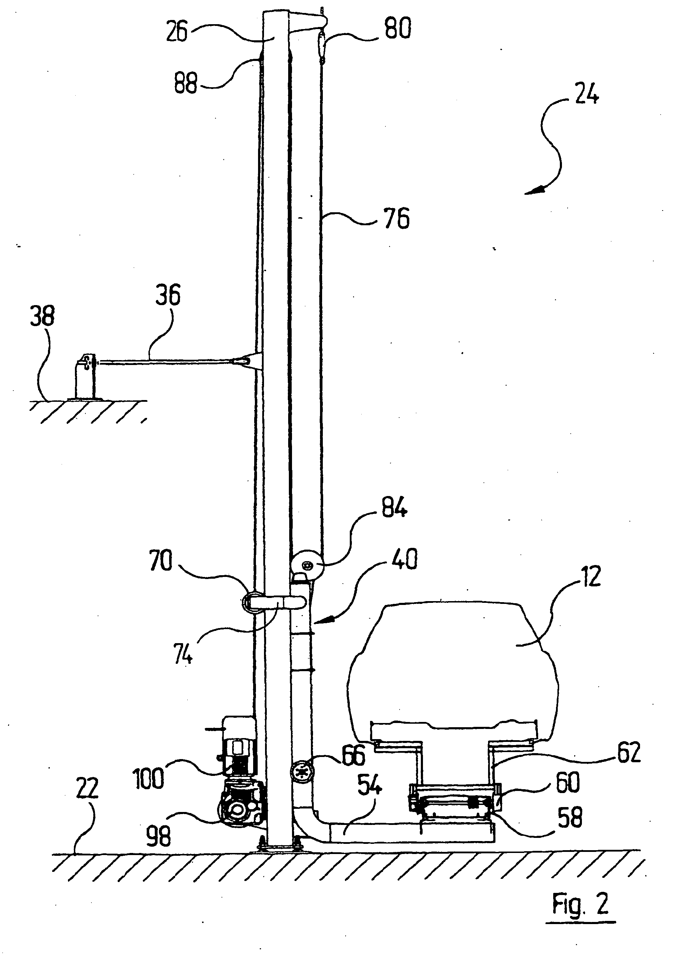

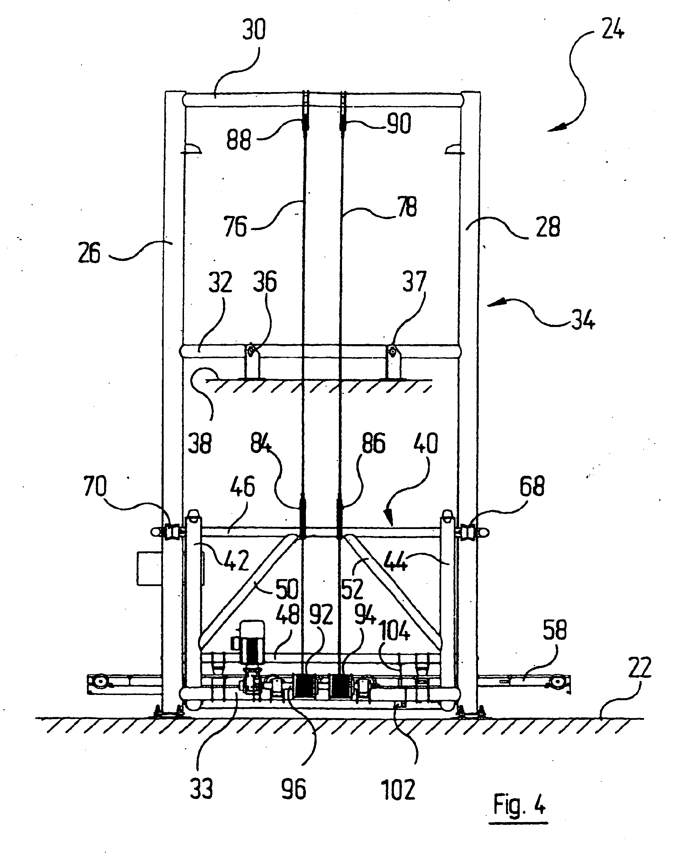

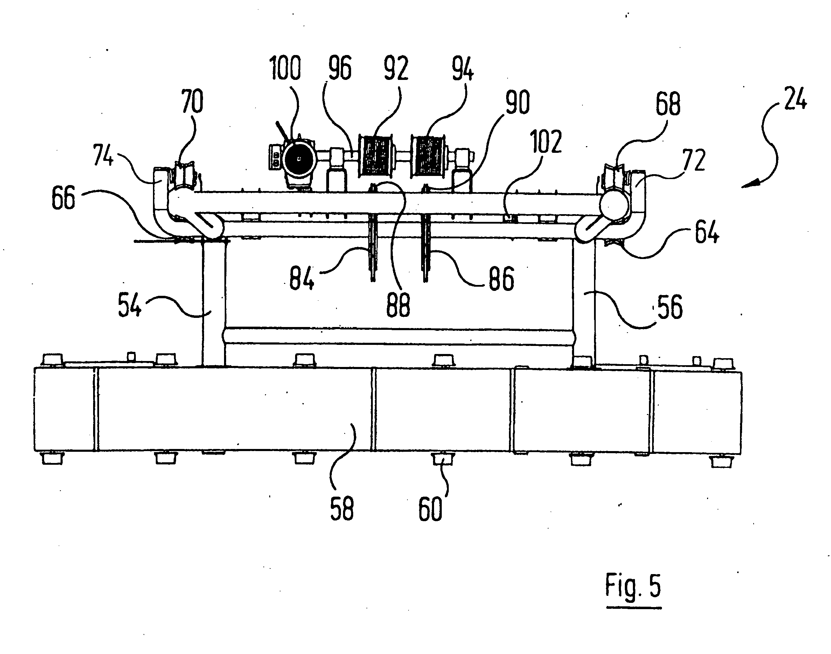

Zum Anheben und Absenken der Kraftfahrzeugkarosserien 12 sind Hubstationen 24 bzw. 25 vorgesehen, deren Einzelheiten im folgenden mit Bezug auf die Figuren 2 bis 5 näher erläutert werden.

Die Figuren 2 bis 5 zeigen die Hubstation 24 in Seitenansicht in zwei unterschiedlichen Hubstellungen, einer Rückansicht bzw. einer Draufsicht. Die Hubstation 24 weist zwei vertikale Führungsständer 26, 28 auf, die zusammen mit einer oberen Quertraverse 30, einer mittleren Quertraverse 32 und eine untere Quertraverse 33 eine Tragstruktur 34 bilden. Die mittlere Quertraverse 32 ist dabei über zwei Befestigungsstreben 36, 37 mit einer Gebäudezwischendecke 38 verbunden, um auf die Führungsständer 26, 28 wirkende Kippmomente abzuleiten.

Die Führungsständer 26, 28 und die Quertraversen 30, 32, 33 sind jeweils aus Stahlrohren mit kreisrundem Querschnitt gefertigt. Das kleine Flächenträgheitsmoment der Rohre ermöglicht eine hohe Steifigkeit der Tragstruktur 34 bei geringem Materialeinsatz.

An den Führungsständern 26, 28 stützt sich in noch näher erläuternder Weise ein Hubschlitten 40 ab, der in vertikaler Richtung verfahren werden kann und in der Horizontalen relativ zu der Tragstruktur 34 festgelegt ist. Der Hubschlitten 40 ist aus zwei vertikalen Rahmenteilen 42, 44, zwei horizontalen Rahmenteilen 46, 48 und zwei Versteifungsstreben 50, 52 zusammengesetzt. Die Rahmenteile 42, 44, 46, 48 und die Versteifungsstreben 50, 52 sind ebenfalls aus Rundrohren gefertigt und durch Schweißen miteinander verbunden.

Von den vertikalen Rahmenteilen 42, 44 des Hubschlittens 40 gehen Lastarme 54, 56 ab, die ebenfalls aus Rundrohren gefertigt sind. Die Lastarme 54, 56 tragen eine insgesamt mit 58 bezeichnete Rollenbahn, die mehrere hintereinander angeordnete Achsen enthält. Die Achsen sind elektromotorisch angetrieben und tragen an ihren Enden Rollen 60. Da derartige Rollenbahnen 58 im Stand der Technik als solche bekannt sind, wird auf die Erläuterung weiterer Einzelheiten hierzu verzichtet.

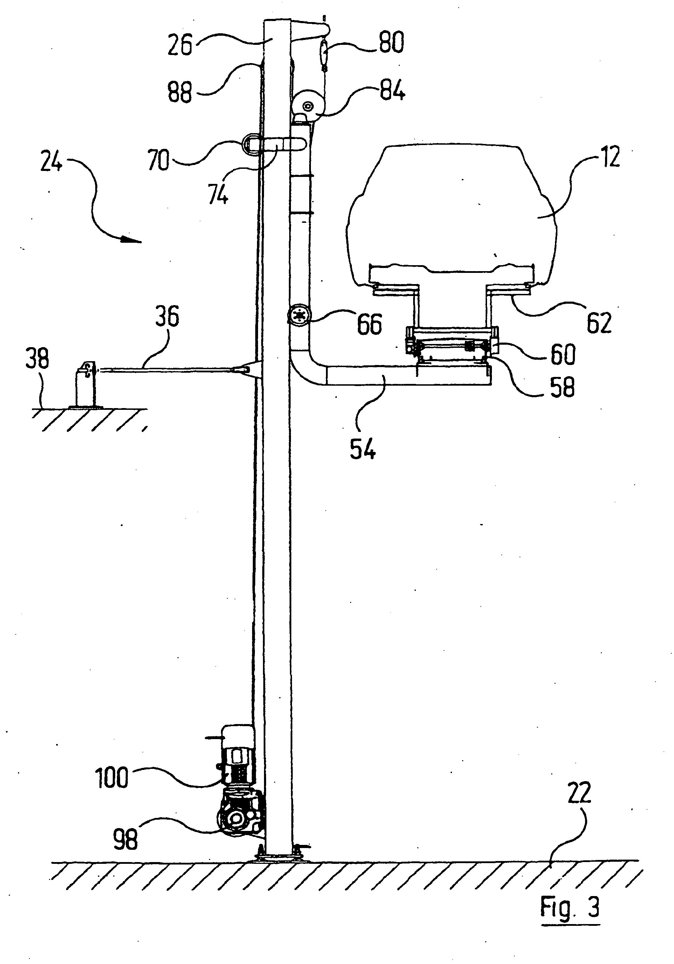

In den Figuren 2 und 3 ist der Anschaulichkeit halber eine Fahrzeugkarosserie 12 gezeigt, die auf einem Träger befestigt ist, der auch als Skid bezeichnet wird und in den Zeichnungen mit 62 bezeichnet ist. Der Skid 62 kann mit Hilfe der angetriebenen Rollen 60 in der Längsrichtung der Rollenbahn 58 verfahren werden. Anstelle der Rollenbahn 58 kann alternativ ein Staukettenförderer oder ein Transportmittel ähnlicher Wirkung verwendet werden.

Der Hubschlitten 40 stützt sich über insgesamt vier an den Führungsständern 26, 28 anliegenden Führungsrollen an der Tragstruktur 34 ab. Zwei Führungsrollen sind im hinteren Bereich der vertikalen Rahmenteile 42, 44 auf gleicher Höhe befestigt und liegen an der Vorderseite der Führungsständer 26 bzw. 28 an. Sie werden deswegen im folgenden als vordere Führungsrollen 64, 66 bezeichnet. Zwei weitere, im folgenden als hintere Führungsrollen 68, 70 bezeichnete Rollen sind an Winkeln 72 bzw. 74 gelagert, die weiter oben von den vertikalen Rahmenteilen 42, 44 des Hubschlittens 40 abgehen und die Führungsständer 26, 28 von der Seite her so weit umgreifen, daß die hinteren Führungsrollen 68, 70 an den Hinterseiten der Führungsständer 26, 28 anliegen.

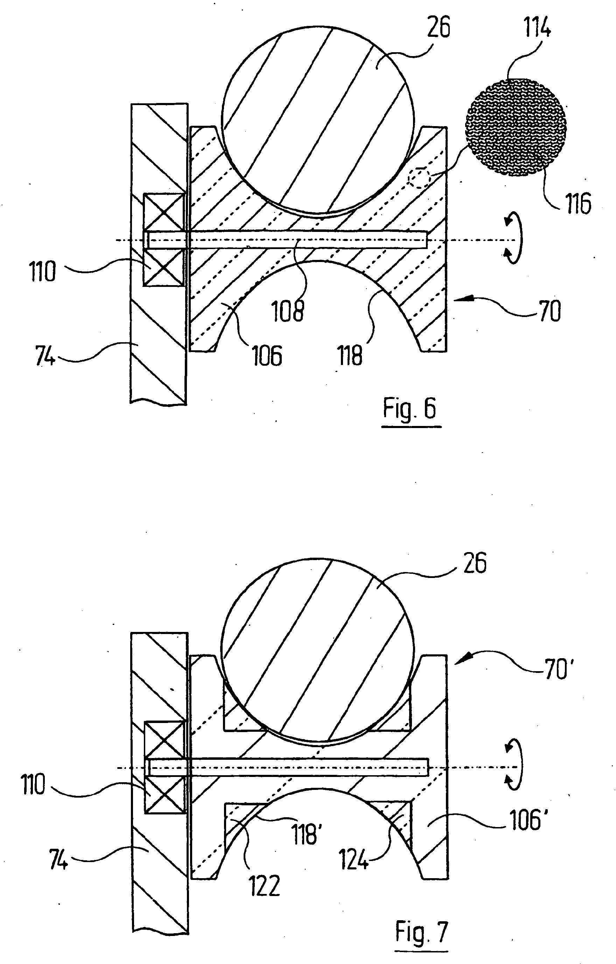

Die Form der Führungsrollen ist so gewählt, daß die Rollflächen jeweils seitlich an zwei gegenüberliegenden Punkten an den rohrförmigen Führungsständern 26, 28 anliegen, wie dies auch in der weiter unten erläuterten Figur 6 gezeigt ist. Alternativ hierzu können die Führungsrollen auch entlang von Kreisbögen, d.h. entlang einer Linie, an den Führungsständern 26, 28 anliegen. Da die Führungsrollen 64, 66, 68, 70 die Führungsständer 26, 28 teilweise auch seitlich umgreifen, ist der Hubschlitten 40 nicht nur gegen Verkippungen um eine horizontale Kippachse gesichert, sondern auch seitlich, d.h. entlang der Längsrichtung der Quertraversen 30, 32, 33 gegenüber der Tragstruktur 34 festgelegt. Nähere Einzelheiten zu den Führungsrollen 64, 66, 68, 70 werden weiter unten mit Bezug auf die Figuren 6 und 7 erläutert.

Zum Anheben und Absenken des Hubschlittens 40 ist ein Seilantrieb mit zwei Stahlseilen 76, 78 vorgesehen. Die beiden Stahlseile 76, 78 sind an Seilbefestigungen 80 bzw. 82 an der oberen Quertraverse 30 befestigt. Das freie Ende der Stahlseile 76, 78 ist jeweils in der Art eines einfachen Flaschenzugs über eine Umlenkrolle 84 bzw. 86 geführt, die an dem oberen horizontalen Rahmenteil 46 des Hubschlittens 40 befestigt sind. Über an der oberen Quertraverse 30 der Tragstruktur 34 befestigte Umlenkrollen 88, 90 werden die Stahlseile 76, 78 wieder nach unten geführt, wo sie auf Seiltrommeln 92, 94 aufgerollt sind. Die Seiltrommeln 92, 94 werden gemeinsam von einer Antriebswelle 96 angetrieben, die über ein Getriebe 98 von einem Antriebsmotor 100 in Drehung versetzt werden kann. Zur exakten Bestimmung der Vertikalposition des Hubschlittens 40 ist ein Seilzuggeber 102 mit einem dünnen Meßseil 104 vorgesehen, dessen freies Ende mit dem Hubschlitten 40 verbunden ist.

Im folgenden wird erläutert, wie oberflächenbehandelte Kraftfahrzeugkarosserien 12 durch den Trocknungsbereich 10 gefördert werden:
Eine Gesamtsteuerung der Anlage sorgt dafür, daß der Hubschlitten 40 der in der Figur 1 links dargestellte Hubstation 24 in die untere Vertikalposition verfahren wird, wenn sich ein Skid 62 mit einer darauf befestigten Fahrzeugkarosserie 12 der Hubstation 24 nähert. Befindet sich die Rollenbahn 58, die auf dem Lastarm 54 der Hubstation 24 befestigt ist, auf der gleichen Höhe wie eine der Hubstation 24 vorgelagerte Rollenbahn, so wird der Skid 62 mit der darauf befestigten Fahrzeugkarosserie 12 an die Rollenbahn 58 der Hubstation 24 übergeben. Der Skid 62 kann bei Bedarf auf der Rollenbahn 58 fixiert werden, um unerwünschte Bewegungen des Skids 62 auf der Rollenbahn 58 während des sich nun anschließenden Anhebens des Hubschlittens 40 zu verhindern.

Sobald sich die Rollenbahn 58 auf der Höhe des Fördersystems 16 befindet, übernimmt das Fördersystem 16 den Skid 62 mit der Fahrzeugkarosserie 12 und führt diesen durch das von Heißluft durchströmte Gehäuse 14. Am Ende des Gehäuses 14 wird die Kraftfahrzeugkarosserie 12 mit Hilfe der zweiten Hubstation 25 abgesenkt und an eine nachfolgende Förderstrecke übergeben.

Die Figur 6 zeigt in einem vereinfachten horizontalen Schnitt weitere Einzelheiten der Führungsrollen, hier am Beispiel der hinteren Führungsrolle 70. Die Führungsrolle 70 besteht aus einem Rollkörper 106, der drehfest auf eine Achse 108 aufgeschoben ist. Die Achse 108 ist in einem Gleitlager 110 aufgenommen, das dem von dem Hubschlitten 40 abgehenden Winkel 74 befestigt ist.

Der Rollkörper 106 der Führungsrolle 70 besteht aus einem Polyamid, dem zur Herabsetzung des elektrischen Widerstands kleine Metallpartikel beigemischt sind. Die Metallpartikel sind in einem Ausschnitt 114 als Punkte 116 angedeutet. Die Metallpartikel 116 verringern den elektrischen spezifischen Durchgangswiderstand des Polyamids von etwa 10¹² Ωm auf einen Wert in der Größenordnung von etwa 10⁴ Ωm.

Durch diese Herabsetzung des elektrischen Widerstands wird das Material des Rollkörpers 106 antistatisch. Elektrische Ladungen, die an einer Rollfläche 118 der Führungsrolle 70 beim Abrollen an dem vertikalen Führungsständer 26 entstehen, sammeln sich somit nicht an der Rollfläche 118 an, sondern können in das Innere des Rollkörpers 106 abfließen. Die Ladungsdichte an der Rollfläche 118 verringert sich auf diese Weise so weit, daß Schmutzpartikel aus der umgebenden Luft nicht mehr elektrostatisch angezogen werden. Da der gesamte Rollkörper 106 elektrisch leitfähig ist, ist die Führungsrolle 70 über die metallische Achse 108, das Gleitlager 110 und den Winkel 74 geerdet.

Die Figur 7 zeigt in einer an die Figur 6 angelehnten Darstellung eine Alternative, bei der eine mit 70' bezeichnete hintere Führungsrolle nicht vollständig, sondern nur im Bereich der mit dem vertikalen Führungsständer 26 tatsächlich in Berührung kommenden Rollflächen 118' aus einem elektrostatischen Material gefertigt ist. Zu diesem Zweck sind in den Rollkörper 106, der aus einem normalen isolierenden Kunststoff besteht, zwei Ringe 122, 124 mit annähernd dreieckigem Querschnitt eingelassen, die aus dem antistatischen Material des in der Figur 6 gezeigten Rollkörpers 106 gefertigt sind.

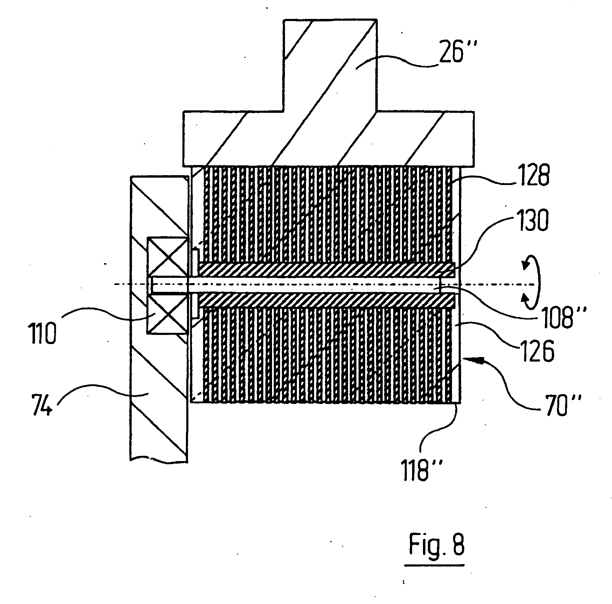

Die Figur 8 zeigt in einer ebenfalls an die Figur 6 angelehnten Darstellung eine weitere Variante, bei der eine mit 70" bezeichnete hintere Führungsrolle einen Rollkörper 106'' hat, der überwiegend aus einem nichtleitendem Kunststoff 126 besteht, dessen elektrischer spezifischer Durchgangswiderstand deutlich größer als 10⁹ Ωm ist. Der Kunststoff 126 ist somit als solcher nicht antistatisch. Eine antistatische Gesamtwirkung wird hier dadurch erzielt, daß in den Kunststoff 126 eine bürstenartige Anordnung dünner metallischer Borsten 128 einvulkanisiert ist, die von einer zentralen Metallhülse 130 radial und weitgehend rotationssymmetrisch nach außen abstehen. Die von dem Kunststoff 126 umgebene Metallhülse 130 ist auf einer Achse 108'' der Führungsrolle 70'' drehfest befestigt und über die Achse 108'' geerdet.

Der Rollkörper 106'' hat bei diesem Ausführungsbeispiel eine zylindrische Form, weswegen die Anlagefläche einer Führungsstruktur 26', an der sich die Führungsrolle 70" abstützt, eben ist.

Die Borsten 128 erstrecken sich so weit in radialer Richtung nach außen, daß sie an die Rollfläche 118'' der Führungsrolle 70'' angrenzen. Dort während eines Abrollvorgangs entstehende Ladungen können über die Borsten 128 in das Innere der Führungsrolle 70'' abfließen und über die geerdete Metallhülse 130 abgeleitet werden.

## Patentansprüche

1. Oberflächenbehandlungsanlage mit einer Umsetzstation (24, 25) zum vertikalen oder horizontalen Umsetzen eines Gegenstands (12), wobei die Umsetzstation (24, 25) umfaßt:
a) eine ortsfeste Tragstruktur (34),
b) einen relativ zu der Tragstruktur (34) verfahrbaren Schlitten (40), der zur Aufnahme des Gegenstands (12) vorgesehen ist,
c) mindestens eine Führungsrolle (64, 66, 68, 70; 70', 70''), über die sich der Schlitten (40) an der Tragstruktur (34) abstützt und die eine Rollfläche (118; 118'; 118'') hat, welche bei einem Abrollen die Tragstruktur (34) berührt,
**dadurch gekennzeichnet,**
**daß** zumindest die Rollfläche (118; 118'; 118'') der mindestens einen Führungsrolle (64, 66, 68, 70; 70', 70'') aus einem antistatischen Material besteht, dessen elektrischer spezifischer Durchgangswiderstand zumindest im Mittel zwischen 10 Ωm und 10⁹ Ωm liegt.

2. Oberflächenbehandlungsanlage nach Anspruch 1, **dadurch gekennzeichnet, daß** der spezifische Durchgangswiderstand des antistatischen Materials zwischen 10³ Ωm und 10⁶ Ωm liegt.

3. Oberflächenbehandlungsanlage nach Anspruch 2, **dadurch gekennzeichnet, daß** der spezifische Durchgangswiderstand des antistatischen Materials zwischen 10⁴ Ωm und 10⁵ Ωm liegt.

4. Oberflächenbehandlungsanlage nach einem der vorhergehenden Ansprüche, **dadurch gekennzeichnet, daß** das Material einen Nichtleiter enthält, dem ein leitfähiges Material (116) beigemischt ist.

5. Oberflächenbehandlungsanlage nach Anspruch 4, **dadurch gekennzeichnet, daß** der Nichtleiter ein thermoplastischer Kunststoff oder Gummi ist.

6. Oberflächenbehandlungsanlage nach Anspruch 4 oder 5, **dadurch gekennzeichnet, daß** das leitfähige Material (116) partikel- oder faserförmig ist.

7. Oberflächenbehandlungsanlage nach einem der Ansprüche 1 bis 3, **dadurch gekennzeichnet, daß** das Material eine Anordnung metallischer Elemente (128) enthält, die in einen Nichtleiter (126) eingebettet sind und sich zumindest im wesentlichen von einer Drehachse der mindestens einen Führungsrolle (70") radial zu deren Rollfläche (118'') hin erstrecken.

8. Oberflächenbehandlungsanlage nach Anspruch 7, **dadurch gekennzeichnet, daß** die Elemente borstenartige elastische Drähte (128) sind.

9. Oberflächenbehandlungsanlage nach einem der vorhergehenden Ansprüche, **dadurch gekennzeichnet, daß** die mindestens eine Führungsrolle an der Tragstruktur befestigt ist.

10. Oberflächenbehandlungsanlage nach einem der Ansprüche 1 bis 8, **dadurch gekennzeichnet, daß** die mindestens eine Führungsrolle (64, 66, 68, 70; 70'; 70'') an dem Schlitten (40) befestigt ist.

11. Umsetzstation zum vertikalen oder horizontalen Umsetzen eines Gegenstands (12) in einer Oberflächenbehandlungsanlage (10), umfassend:
a) eine ortsfeste Tragstruktur (34),
b) einen relativ zu der Tragstruktur (34) verfahrbaren Schlitten (40), der zur Aufnahme des Gegenstands (12) vorgesehen ist,
c) mindestens eine Führungsrolle (64, 66, 68, 70; 70'; 70''), über die sich der Schlitten an der Tragstruktur (34) abstützt und die eine Rollfläche (118; 118'; 118'') hat, welche bei einem Abrollen die Tragstruktur berührt,
**dadurch gekennzeichnet,**
**daß** zumindest die Rollfläche (118; 118'; 118'') der mindestens einen Führungsrolle (64, 66, 68, 70; '70'; 70'') aus einem antistatischen Material besteht, dessen elektrischer spezifischer Durchgangswiderstand zumindest im Mittel zwischen 10 Ωm und 10⁹ Ωm liegt.

## Claims

1. Surface treatment installation comprising a transfer station (24, 25) for the vertical or horizontal transfer of an article (12), wherein the transfer station (24, 25) comprises:
a) a stationary supporting structure (34),
b) a slide (40) that is provided for receiving the article (12) and is displaceable relative to the supporting structure (34),
c) at least one guide roller (64, 66, 68, 70; 70', 70''), via which the slide (40) is supported on the supporting structure (34) and which has a roller surface (118; 118'; 118'') that during a rolling operation is in contact with the supporting structure (34),
**characterized in that**
at least the roller surface (118; 118'; 118'') of the at least one guide roller (64, 66, 68, 70; 70', 70'') is made of an antistatic material, the electrical volume resistivity of which is at least on average between 10 Ωm and 10⁹ Ωm.

2. Surface treatment installation according to claim 1, **characterized in that** the volume resistivity of the antistatic material is between 10³ Ωm and 10⁶ Ωm.

3. Surface treatment installation according to claim 2, **characterized in that** the volume resistivity of the antistatic material is between 10⁴ Ωm and 10⁵ Ωm.

4. Surface treatment installation according to one of the preceding claims, **characterized in that** the material contains a nonconductor, to which a conductive material (116) has been added.

5. Surface treatment installation according to claim 4, **characterized in that** the nonconductor is a thermoplastic polymer or rubber.

6. Surface treatment installation according to claim 4 or 5, **characterized in that** the conductive material (116) is in the form of particles or fibres.

7. Surface treatment installation according to one of claims 1 to 3, **characterized in that** the material contains an arrangement of metal elements (128), which are embedded in a nonconductor (126) and extend at least substantially from an axis of rotation of the at least one guide roller (70'') radially in the direction of the roller surface (118'') thereof.

8. Surface treatment installation according to claim 7, **characterized in that** the elements are bristle-like resilient wires (128).

9. Surface treatment installation according to one of the preceding claims, **characterized in that** the at least one guide roller is fastened to the supporting structure.

10. Surface treatment installation according to one of claims 1 to 8, **characterized in that** the at least one guide roller (64, 66, 68, 70; 70'; 70'') is fastened to the slide (40).

11. Transfer station for the vertical or horizontal transfer of an article (12) in a surface treatment installation (10), comprising:
a) a stationary supporting structure (34),
b) a slide (40) that is provided for receiving the article (12) and is displaceable relative to the supporting structure (34),
c) at least one guide roller (64, 66, 68, 70; 70'; 70''), via which the slide is supported on the supporting structure (34) and which has a roller surface (118; 118'; 118'') that during a rolling operation is in contact with the supporting structure,
**characterized in that**
at least the roller surface (118; 118'; 118'') of the at least one guide roller (64, 66, 68, 70; 70'; 70'') is made of an antistatic material, the electrical volume resistivity of which is at least on average between 10 Ωm and 109 Ωm.

## Revendications

1. Installation de traitement de surface comprenant une station de transfert (24, 25) pour le transfert vertical ou horizontal d'un objet (12), la station de transfert (24, 25) comprenant :
a) une structure porteuse stationnaire (34),
b) un chariot (40) déplaçable par rapport à la structure porteuse (34), qui est prévu pour recevoir l'objet (12),
c) au moins un galet de guidage (64, 66, 68, 70 ; 70', 70") par l'intermédiaire duquel le chariot (40) s'appuie sur la structure porteuse (34) et qui possède une surface de roulement (118 ; 118' ; 118") qui est en contact avec la structure porteuse (34) lors d'un roulement,
**caractérisée en ce**
**qu'**au moins la surface de roulement (118 ; 118' ; 118") dudit au moins un galet de guidage (64, 66, 68, 70 ; 70', 70") est constituée d'un matériau antistatique dont la résistivité est au moins comprise entre 10 Ωm et 10⁹ Ωm en moyenne.

2. Installation de traitement de surface selon la revendication 1, **caractérisée en ce que** la résistivité du matériau antistatique est comprise entre 10³ Ωm et 10⁶ Ωm.

3. Installation de traitement de surface selon la revendication 2, **caractérisée en ce que** la résistivité du matériau antistatique est comprise entre 10⁴ Ωm et 10⁵ Ωm.

4. Installation de traitement de surface selon l'une des revendications précédentes, **caractérisée en ce que** le matériau contient un non-conducteur auquel un matériau conducteur (116) est mélangé.

5. Installation de traitement de surface selon la revendication 4, **caractérisée en ce que** le non-conducteur est une matière plastique thermoplastique ou du caoutchouc.

6. Installation de traitement de surface selon la revendication 4 ou 5, **caractérisée en ce que** le matériau conducteur (116) se présente sous forme de particules ou de fibres.

7. Installation de traitement de surface selon l'une des revendications 1 à 3, **caractérisée en ce que** le matériau contient un arrangement d'éléments métalliques (128) qui sont incorporés dans un non-conducteur (126) et s'étendent au moins essentiellement d'un axe de rotation dudit au moins un galet de guidage (70") radialement vers sa surface de roulement (118").

8. Installation de traitement de surface selon la revendication 7, **caractérisée en ce que** les éléments sont des fils élastiques à la manière de soies (128).

9. Installation de traitement de surface selon l'une des revendications précédentes, **caractérisée en ce que** ledit au moins un galet de guidage est fixé à la structure porteuse.

10. Installation de traitement de surface selon l'une des revendications 1 à 8, **caractérisée en ce que** ledit au moins un galet de guidage (64, 66, 68, 70 ; 70', 70") est fixé au chariot (40).

11. Station de transfert pour le transfert vertical ou horizontal d'un objet (12) dans une installation de traitement de surface (10), laquelle station de transfert comprend :
a) une structure porteuse stationnaire (34),
b) un chariot (40) déplaçable par rapport à la structure porteuse (34), qui est prévu pour recevoir l'objet (12),
c) au moins un galet de guidage (64, 66, 68, 70 ; 70', 70") par l'intermédiaire duquel le chariot (40) s'appuie sur la structure porteuse (34) et qui possède une surface de roulement (118 ; 118' ; 118") qui est en contact avec la structure porteuse (34) lors d'un roulement,
**caractérisée en ce**
**qu'**au moins la surface de roulement (118 ; 118' ; 118") dudit au moins un galet de guidage (64, 66, 68, 70 ; 70', 70") est constituée d'un matériau antistatique dont la résistivité est au moins comprise entre 10 Ωm et 10⁹ Ωm en moyenne.
